# EUROPEAN PATENT SPECIFICATION

(11) **EP 1 458 608 B1**
(45) Date of publication and mention of the grant of the patent: **07.06.2006**
(21) Application number: 02793292.0
(22) Date of filing: 05.12.2002
(51) Int. Cl.: B62H 5/00, B62H 5/18, E05B 67/36, B62H 5/14, B62H 5/20, B62J 11/00

(54) **DISK-BRAKE LOCK FOR A MOTORCYCLE**
SCHEIBENBREMSENSCHLOSS FÜR EIN MOTORRAD
VERROUILLAGE DE FREIN A DISQUE DE MOTOCYCLE

(30) Priority: 14.12.2001 US 339464 P
(43) Date of publication of application: 22.09.2004
(73) Proprietor: Hogesta, Efraeyim, 42860 Moshav Burgata (IL)
(72) Inventor: Hogesta, Efraeyim, 42860 Moshav Burgata (IL)
(74) Representative: Casey, Lindsay Joseph
(86) International application number: PCT/IL2002/000986
(87) International publication number: WO 2003/051707

(56) References cited:
- EP-A- 0 716 007
- DE-U- 20 002 685
- NL-A- 9 300 794
- US-A- 4 436 232
- US-A- 5 127 562
- US-A- 5 265 451
- US-A- 5 492 206
- US-A- 5 662 255
- US-A- 6 131 427
- US-B1- 6 178 787
- US-B1- 6 230 530

## Description

### FIELD OF THE INVENTION

The present invention relates to a motorcycle disk-brake lock, and more particularly to a disk-brake lock which provides a clear indication to a user thereof that the lock is engaged with the disk-brake, to thereby prevent an offhand attempt to drive the motorcycle while the lock is engaged with the disk-brake.

### BACKGROUND OF THE INVENTION

Various anti-theft devices for motorcycles have been suggested along the years. The simplest security device is a large chain, which can be looped through one of the wheels and/or a portion of the frame (interchangeably referred to also as *chassis*), and often also secured around a suitable stationary object such as a tree or lamp post. The chain must be sufficiently long, making it cumbersome to store and carry.

Other anti-theft arrangements for motorcycles are alarm systems with or without immobilizing systems, GPS assisted tracking systems, etc.

Alternatively, a disk-brake lock may be used. This is a lock, such as that described in U.S. Patent Nos. 5,265,451 to Phifer and 5,492,206 to Shieh, which is secured through one of the holes formed in the disk portion of a disk-brake, preventing rotation of the motorcycle wheel. This is a highly effective anti-theft device, but has two main disadvantages:
A. It is possible for the motorcycle to attempt traveling a very short distance with the lock in place. This may occur when the owner of the motorcycle forgets that the lock is engaged, or during an attempted of theft by a potential thief or even an un-aware authorized user. The operator then starts the motorcycle, shifts into first gear and starts to roll. The wheel will be able to rotate until the disk-brake lock comes into contact with the brake caliper or some other part of the motorcycle, upon which the wheel will abruptly stop rotating.
   This would likely cause the motorcycle to fall over, possibly over the rider, or cause the driver to be thrown from the motorcycle and injured and likely cause damage to various parts of the motorcycle, e.g. damage the disk-brake, necessitating extremely expensive repair work.
   Devices intended to warn an operator that a locking device is attached to the motorcycle are known, including U.S. Patent No. 6,230,530 to Voigt *et al.* However, in moments of stress or when hurrying, the operator may not notice the warning device or even a warning signal. An ideal lock reminder device would therefore preclude operation of the motorcycle while the lock is engaged. A device aimed at fulfilling this purpose is described by Titterton in U.S. Patent No. 6,175,787. However, this does not solve the second problem associated with disk-brake locks, as described below.
B. Disk-brake locks are very heavy and bulky and are therefore difficult to transport when the motorcycle is in use, and therefore a suitable storage location is required for this particular style of locks. A disk-brake lock is commonly stored in a pouch or storage bin attached to the chassis of the motorcycle, in the helmet compartment, or similar storage devices, which are extremely inconvenient, or are carried by the operator.

As described in U.S. Patent No. 4,436,232 to Zane *et al.,* a lock holder has been devised for fastening to the frame of a motorcycle for carrying a motorcycle lock. This comprises a mounting unit for fixing to the frame of a motorcycle and a carrier unit at one side of the mounting unit for carrying a motor lock. However, the lock holder may be heavily vibrated when the motorcycle runs over an uneven road, causing the lock to fall out of the holder. Further lock holders include that described by Lu in U.S. Patent No. 5,662,255:

U.S. Patent No. 6,131,427 to Webber *et al* describes a disk-brake lock for a motorcycle according to the preamble of claim 1. The disk lock may be carried by an elongated footpeg of a motorcycle which serves also as a lock holder. However, this elongated holder is deliberately indented to function for dual purpose, namely as a carrier of the lock and as a foot rest peg for the motorcycle. The holder is not intended for and is not capable of preventing operation of the motorcycle when the lock is detached from the holder. The holder does not provide a significant reminder for the operator to remove the disk-brake lock.

Therefore it is an object of the present invention to provide a motorcycle disk brake lock which makes it highly unlikely or prevents normal operation of the motorcycle while the lock is engaged to the disk-brake and to thereby provide a clear alert to an operator thereof, and which can be conveniently stored and transported when not in use as a disk-brake lock Even more so, an attempt to brake the lock may result in irreversible damage therein thereto such that it may no longer serve functionally, thus prevent operating the motorcycle.

### SUMMARY OF THE INVENTION

Accordingly, it is an object of the present invention to overcome the disadvantages of the prior art and provide a disk-brake lode which when in use as a lock prevents a motorcycle from being operated in the normal manner, and when not in use as a lock may be easily and conveniently carried an the motorcycle.

According to aspects of the present invention, there is provided a lock as specified in claim 1, and a motorcycle comprising a lock as specified in claim 22.

The present invention, according to its broad aspect, is directed to a disk-brake lock for a motorcycle, which lock is a functional component of the motorcycle, such that it is unlikely to start and roll the motorcycle before disengaging the lock from the disk-brake and reengaging it at another location of the motorcycle for performing its function essential for starting or driving the motorcycle.

The term *functional component* as used herein the specification and claims denotes any component of the motorcycle required for starting or driving it, such as, for example a footrest peg, a foot-brake paddle, a gear shift peg, a hand-grip, a hand-gas grip etc, Preferably, said functional component is an essential component, i.e. starting or riding the motorcycle is highly unlikely or not possible at all. Typically, a functional component functions and resembles in appearance a conventional corresponding component.

In accordance with an embodiment of the present invention, there is provided a disk-brake lock for a motorcycle comprising a U-like shaped lock member defining a gap sized to receive a wheel disk-brake, a locking unit for removably attaching the lock member to a mounting unit at a functional location of the motorcycle and for locking engagement with the disk-brake. The arrangement is such that the locking unit of said lock member is attachable to said mounting unit for use as a functional component of the motorcycle and, when removed from said mounting unit, may be used as a wheel disk-brake lock.

It is thus possible to provide a motorcycle wherein more than one locking mechanism is provided, e.g. a first element useful as a U-like shaped lock for lockingly embracing the disk-brake (for example the disk-brake of the front wheel), and a second element useful as a locking pin (king-pin type lock) useful for locking engagement with the rear wheel of the motorcycle.

According to a different embodiment, the disk-brake lock is a pin-type lock (at times referred to as a *king-pin lock*) fitted for locking engagement into a hole of the disk-brake, and attachable to a mounting unit of the motorcycle in the same manner. A lock of this type may be easily fitted on either a front or a rear disk-brake of a motorcycle.

According to one embodiment of the invention, the lock member is functional as a footpeg (also referred to as a *footrest*) or paddle and according to another embodiment the lock member is functional as a hand grip.

According to still an embodiment of the present invention, the locking unit comprises an integral alarm system which generates an audible alarm signal upon displacement, while engaged with the disk-brake. By a further modification, the locking unit functions as an electronic immobilizer cooperating in conjunction with the mounting unit, such that the motorcycle can not be started without said locking unit. According to one particular application, an alarm/alert system is activated upon an attempt to start the motorcycle when the locking unit is disengaged from the mounting unit.

An advantage of the present invention is that the operator is instantly and automatically reminded that the lock is still engaged when attempting to operate the motorcycle.

A further advantage of the present invention is that a solution is provided for transport and placing of the lock when not in use as a lock.

According to another aspect of the invention, there is provided a motorcycle fitted with a functional component detachably connectable to a mounting unit of the motorcycle for cooperation therewith at an operative position of the motorcycle, and fitted for locking engagement to a disk-brake of the motorcycle to serve as a disk-brake lock; such that it is unlikely to start and roll the motorcycle before disengaging the lock from the disk-brake and re-engaging it to the mounting unit of the motorcycle for performing its function. Additional features and advantages of the invention will become apparent from the following drawings and description.

### BRIEF DESCRIPTION OF THE DRAWINGS

For a better understanding of the invention and to see how it may be carried out in practice, some embodiments will now be described, by way of non-limiting examples only, with reference to the accompanying drawings, in which:
**Fig. 1** is a top left isometric view of a motorcycle fitted with a disk-brake lock according to the present invention;
**Fig. 2** is an enlargement of the portion marked **II** in Fig. 1, illustrating the footpeg and gear-shift paddle zone;
**Fig. 3A** shows the use of a key to remove a multi-purpose disk-brake lock/footpeg from a connector unit on which it is mounted in the footpeg configuration, according to a first embodiment thereof;
**Fig. 3B** shows the footpeg mounting adapter upon removal of the disk-brake lock/footpeg;
**Fig. 3C** shows a portion of a disk-brake with the disk-brake lock/footpeg in use as a motorcycle disk-brake lock;
**Fig. 4** is an isometric view of the dual-function disk-brake lock/ footpeg of Figs. 3 isolated from the motorcycle;
**Fig. 5A** is an enlargement of the portion marked **V** in Fig. 1, illustrating a hand-grip useful also as a disk-brake lock, according to another embodiment of the present invention;
**Fig. 5B** is an exploded view showing the disk-brake lock/ hand-grip and the hand-grip mounting adapter;
**Fig. 5C** shows a portion of a disk-brake fitted with the disk-brake lock/hand-grip in use as a motorcycle disk-brake lock;
**Fig. 6A** shows a gear-shift paddle useful also as a disk-brake lock, according to still another embodiment of the present invention;
**Fig. 6B** shows a portion of a disk-brake fitted with the disk-brake lock/gear-shift paddle in use as a motorcycle disk-brake lock;
**Fig. 6C** shows the gear-shift paddle mounting adapter upon removal of the disk-brake lock/ gear-shift paddle;
**Fig. 7A** shows a footpeg useful as disk-brake according to a further embodiment of the invention; and
**Fig. 7B** shows the disk-brake of Fig. 7A lockingly mounted on a disk-brake of a rear wheel of a motorcycle;
**Fig. 8A** is an isometric view of a foot rest/ disk-brake lock according to an embodiment of the invention, detached from a corresponding mounting unit;
**Fig. 8B** is a schematic sectioned representation illustrating the foot rest/disk-brake lock of Fig. 8A lockingly engaged to the mounting unit; and
**Fig. 8C** is the same as Fig. 8B, illustrating the foot rest/ disk-brake lock detached from the mounting unit.

### DETAILED DESCRIPTION OF THE INVENTION

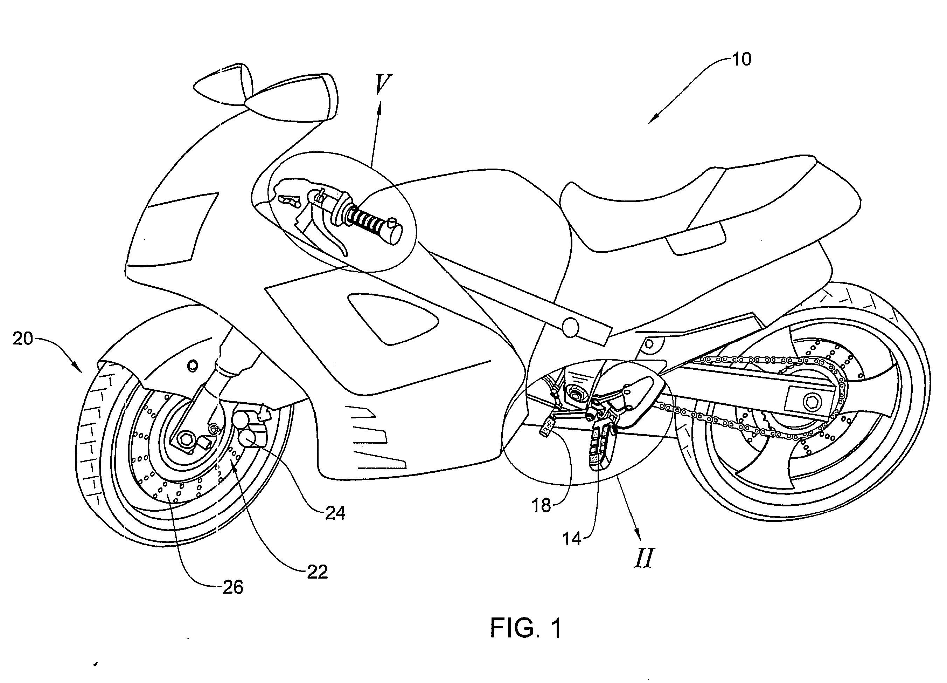

Attention is first directed to Fig. 1 showing a motorcycle generally designated **10** and fitted with a footpeg **14** (also known as a *foot rest*) on which a motorcycle rider rests his left foot during the operation of the motorcycle and a gear shift paddle **18,** operable by the users left foot. Another footpeg is provided at the right side of the motorcycle, serving to rest/support the right foot which typically operates the rear brake pedal (not seen in Fig. 1). The footpeg 14 is a simple device, extending essentially horizontally perpendicular to the body of the motorcycle, which in some instances may be collapsible.

The front wheel assembly **20** of the motorcycle **10** is fitted with a disk-brake assembly 22 comprising a hydraulic caliper system **24** and a braking disk (disk-brake) **26**, wherein braking occurs upon squeezing a hand-brake lever (not seen) whilst gripping a hand-grip (also not seen in Fig.1), resulting in clamping of the calipers about the braking disk **26,** as known *per se.*

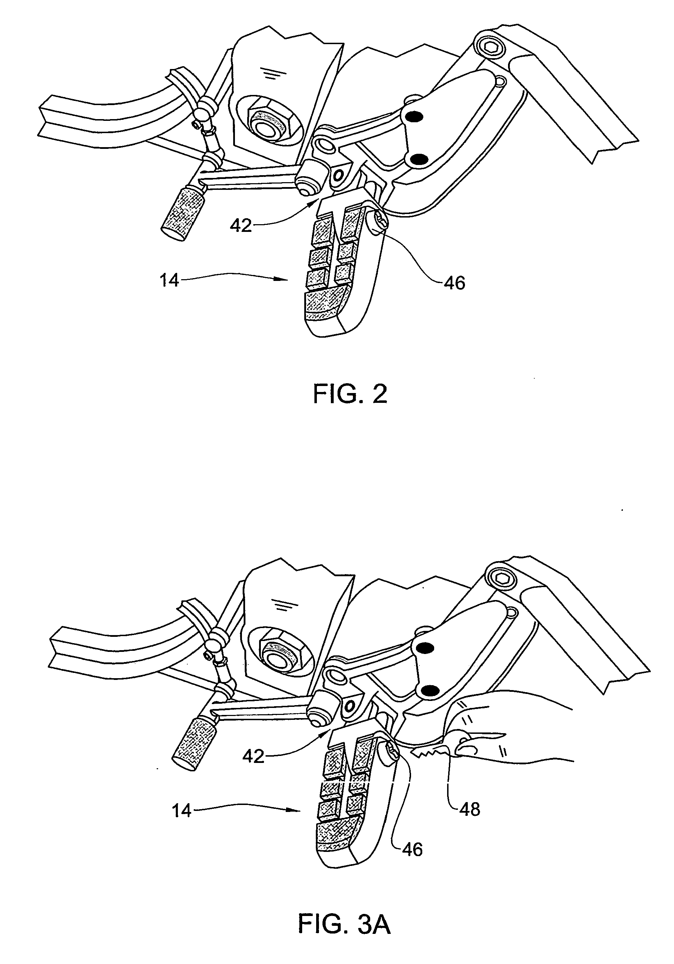

As can better be seen in the enlargement Figures 2 to 7, each of the footpeg **14,** the paddle portion of gear shift paddle **18** and both hand-grips, comprises a metal core (not clearly seen in some of the Figs.) provided with an outer layer of rubber or similar non-slip material to prevent the operator's foot or hand, respectively, from slipping off the peg or paddle or improving the hand grip, as may be the case. In some cases, a footpeg is provided (not shown) at a bottom outer end with a ground 'sensor' which is a downwardly projecting pin useful for indicating to the rider the extent of inclination of the motorcycle, when riding in a curb.

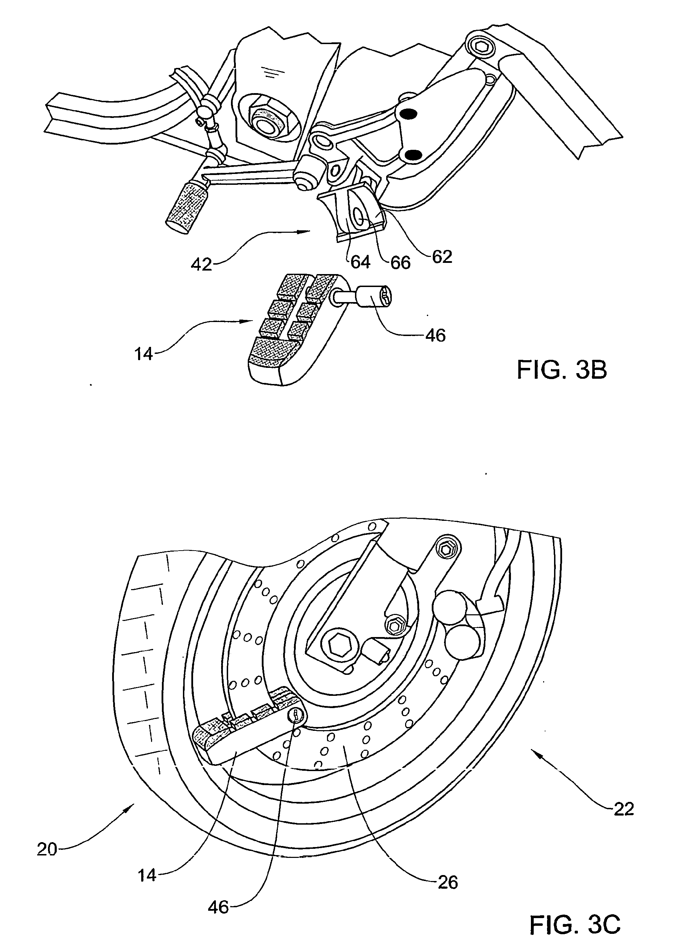

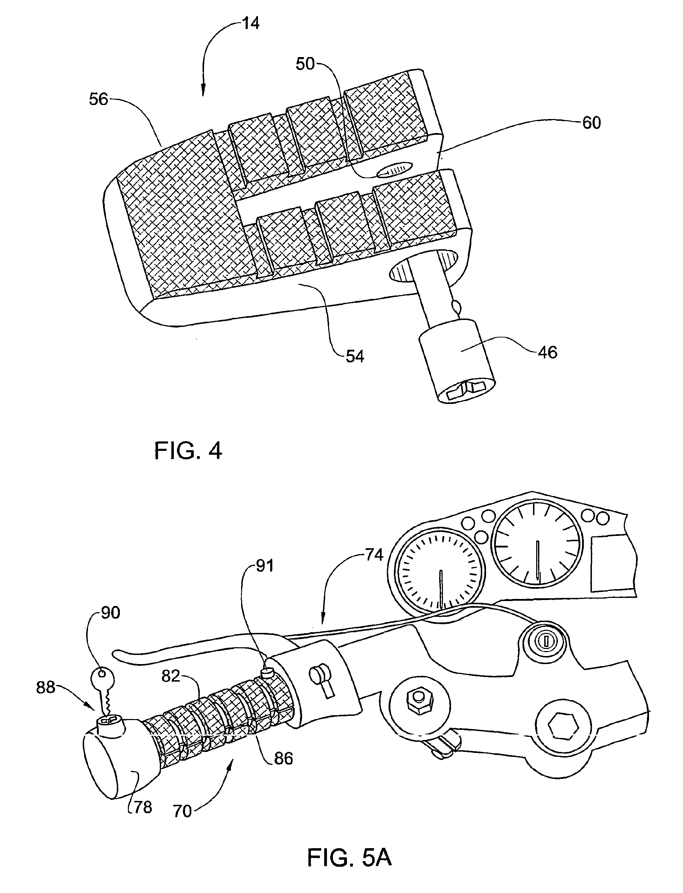

With further reference being made now to Figs. 2 and 3A to 3C, there is illustrated a first embodiment of a disk-brake lock according to the invention, where the footpeg **14** is removably attached to the motorcycle via a mounting unit **42** (best seen in Fig. 3B) and fastened thereto by pin-lock mechanism **46**. A through-hole **50** (seen in Fig. 4) is formed in footpeg **14**, such that it may be attached to mounting unit **42** by insertion of the pin-lock mechanism **46** there through. Mounting unit **42** is itself fixedly attached to the motorcycle by a bolt or other standard connecting device or being welded thereto. Pin-lock mechanism **46** is locked and unlocked by appropriate rotation of a key **48** (Fig. 3A) in order for footpeg **14** to be attached to or removed from mounting unit **42.** The overall appearance of the footpeg **14** is the same as a conventional footpeg and its functionality is not effected. Preferably, some covering means is provided (not shown) for covering the key-hole of the pin-lock mechanism to thereby protect the locking mechanism from ingress of dirt, mud, water, etc.

It is appreciated that according to an embodiment of the invention, the mounting unit **42** may be attached to the motorcycle also in retrofit, i.e. after the motorcycle has left the factory.

As can be seen in the Figures, and best in Fig. 4, the dual-function disk-brake lock/footpeg **14** comprises a substantially 'U'-like shaped metal body **54** having a rubber anti-slip layer **56** along its upper surface and outer edge. The region between the two parallel sides of the 'U' forms a disk receiving slot **60**.

In Figure 2 the disk-brake lock/footpeg **14** is seen in its footpeg configuration functional to support the left foot of the motorcycle rider. In Fig. 3A the pin-lock mechanism **46** is unlocked to enable detachment of the footpeg **14** from the mounting unit **42**, as seen in Fig. 3B. This position in itself makes it rather uncomfortable or impossible to ride the motorcycle as the rider will encounter difficulties in shifting gears by means of gear-shift paddle **18**.

Fig. 3B shows mounting unit **42** upon removal of disk-brake lock/footpeg **14**. Mounting unit **42** comprises a body section **62** fitted with a projecting member **64,** formed with a central through-hole **66** for insertion of a locking pin of the pin-lock mechanism **46**. At the assembled position of the footpeg **14** over the mounting unit **42**, the foot peg is steady and provides firm support. However, according to some embodiments, the footpeg may be foldable about the mounting unit.

Referring now to Fig. 3C, the disk-brake lock/footpeg **14** is shown in use as a disk bake lock. The disk-brake lock/footpeg **14** is mounted on the motorcycle disk-brake **26** such that the disk receiving slot **60** (best seen in Fig. 4) embraces the disk-brake, and then the footpeg/disk-brake lock **14** is locked in place by means of the pin-lock mechanism **46.** The motorcycle disk-brake lock/footpeg of the present invention provides a disk-brake lock for use as an anti-theft device, such that the motorcycle cannot be operated with the disk-brake lock engaged, whereby the wheel of the motorcycle is unable to complete a full revolution.

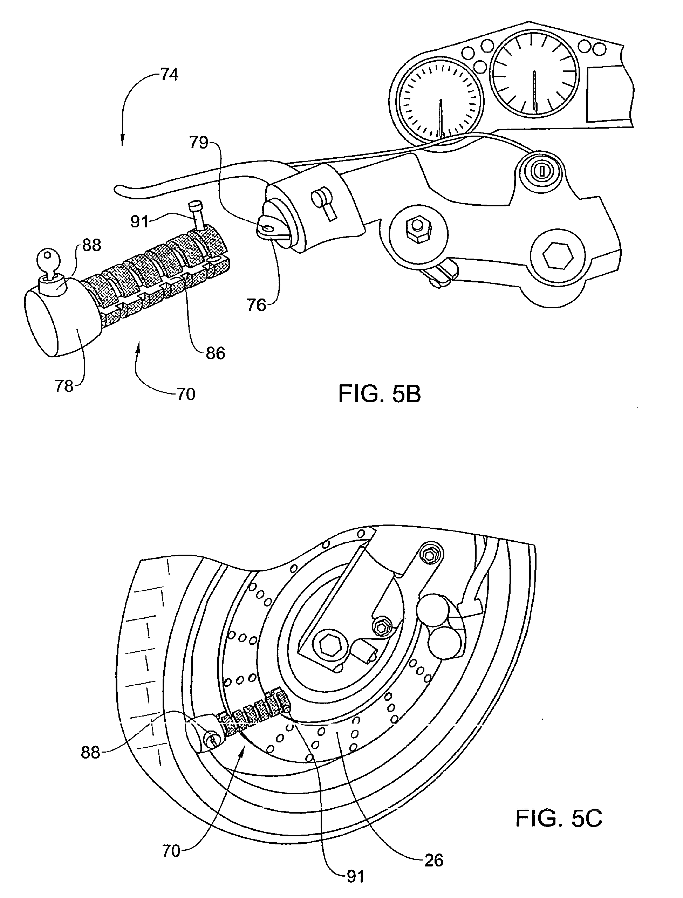

Further attention is now directed to Figs. 5A to 5C illustrating a further embodiment of a disk-brake lock in accordance with the present invention where a handgrip generally designated **70** (Fig. 5A) is detachably connected to the handlebar assembly **74** by means of a mounting unit **76** (Fig. 5B). The handgrip **70** is a generally round member having a solid metal core **78** and is coated with a suitable rubber **82** for effective and pleasing hand-gripping. The handgrip **70** is formed with a disk- receiving slot **86** sized to accommodate the disk-brake **26**.

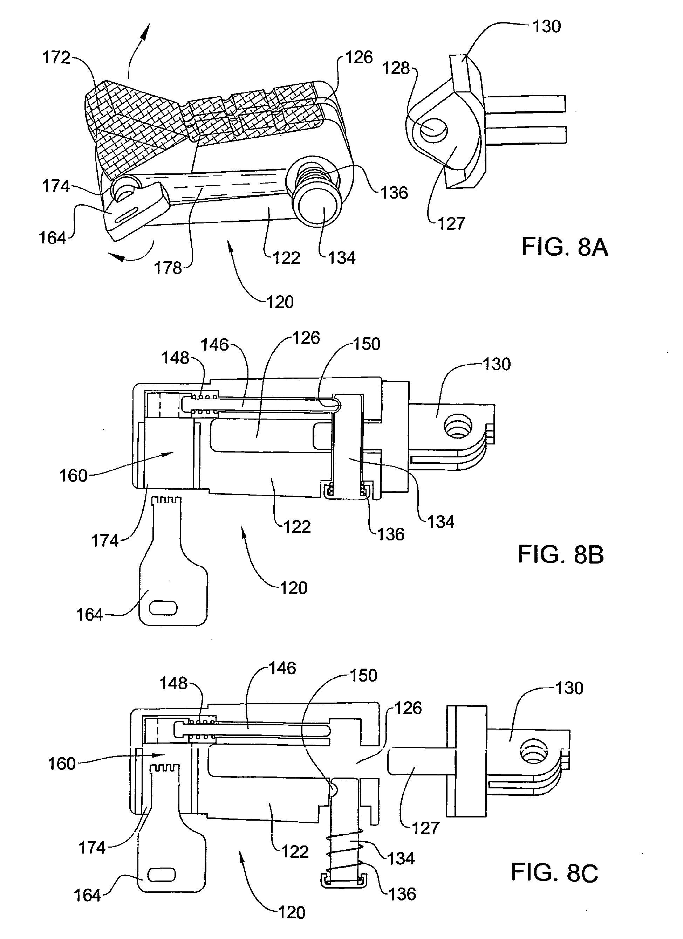

The handgrip **70** is detachable from the mounting unit **76** by a locking mechanism **88** which by means of a key **90** may be locked and firmly attached to the mounting unit **76** by a locking pin **91**, or unlocked to remove the handgrip **70** so it can facilitate as a disk-brake lock, in Fig. 5C. When the handgrip **70** is mounted on the disk-brake **26** it is locked in position by same locking mechanism **88** and corresponding locking pin **91**. An example of a locking mechanism suitable for that purpose is illustrated with reference to figs. 8B and 8C.

In order to prevent rotational displacement of the hand grip **70** with respect to the handlebar assembly **74**, the mounting unit **76** is formed with a hole **79** engageable by the corresponding locking pin **91** of the handgrip, so as to ensure correct relative positioning and to prevent said rotational displacement there between.

According to a particular embodiment, the hand grip is an assembly wherein the span of the disk- receiving slot is variable between a constricted position when attached to the mounting unit, and an expanded position for locking engagement with a disk-brake. Accordingly, while attached to the mounting unit **76,** the slot **86** is constricted where it is practically not noticeable (Fig. 5A), and when it is detached from the mounting unit **76** the slot **86** spontaneously expands (Figs. 5B and 5C) to a size suited for accommodation of the disk-brake. This arrangement is facilitated by means of the locking mechanism **88** and a loaded spring (not shown).

The arrangement is such that when the handgrip **70** is in use as a disk-brake lock (Fig. 5C) it is absent from the handlebar assembly **74** (Fig 5B) and therefore, when an operator wishes to prepare for driving the motorcycle, he will immediately notice that the handgrip is missing and will thus become aware that the disk-brake lock is still engaged. Further, the operator will not be able to shift the motorcycle into gear and it is thus unlikely that the machine can be driven.

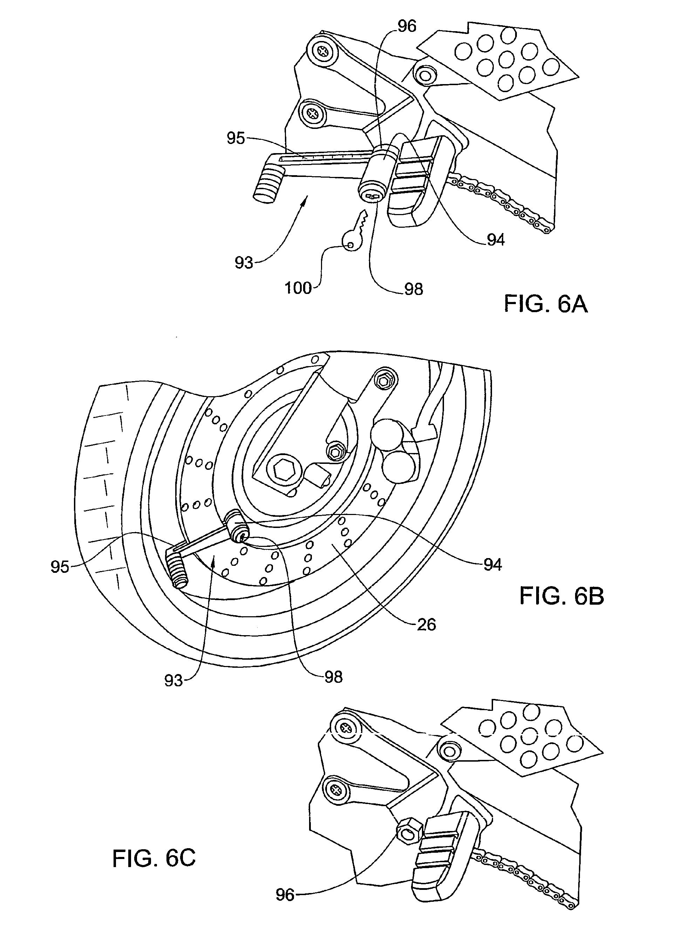

Turning now to Figs. 6A-6C, there is illustrated still a different embodiment wherein a gear-shift pedal **93** is dual-function and serves as a gear- shift pedal (Fig. 6A) and as a disk-brake lock (Fig. 6B). The gear-shift pedal **93** comprises a disk-brake receiving slot **95** and a connecting portion **94** (Fig. 6A) for lockingly mounting over a connecting/mounting unit **96** (Fig. 6C) by means of a locking mechanism **98** and an appropriate key **100**. Connecting/mounting unit 96 has a hexagonal cross-section (Fig. 6C) snugly receivable within a corresponding receptacle formed at the gear-shift pedal **93** (not seen) to thereby fix the relative angular position there between.

In its function as a gear-shift pedal **93** (Fig. 6A) the device is tightly secured to the mounting unit **96** to avoid relative displacement between the gear-shift pedal **93** and the mounting unit **96** whereby gear shifting by said pedal is not effected.

In its function as a disk-brake lock, the gear-shift pedal **93** is secured over the disk-brake **26** and is locked in place by means of the locking mechanism **98**, as in Fig. 6B. A protective cap or cover may be fitted over the locking mechanism **98,** for the reasons mentioned hereinabove.

It is appreciated that in its function as a disk-brake lock, the gear-shift pedal **93** is absent from its originally intended position as a gear-shift pedal (Fig. 6A) whereupon the motorcycle cannot be operated and whereby the motorcycle rider will become aware of the fact that the disk-brake lock is engaged with the disk-brake instantaneously upon sitting on the motorcycle.

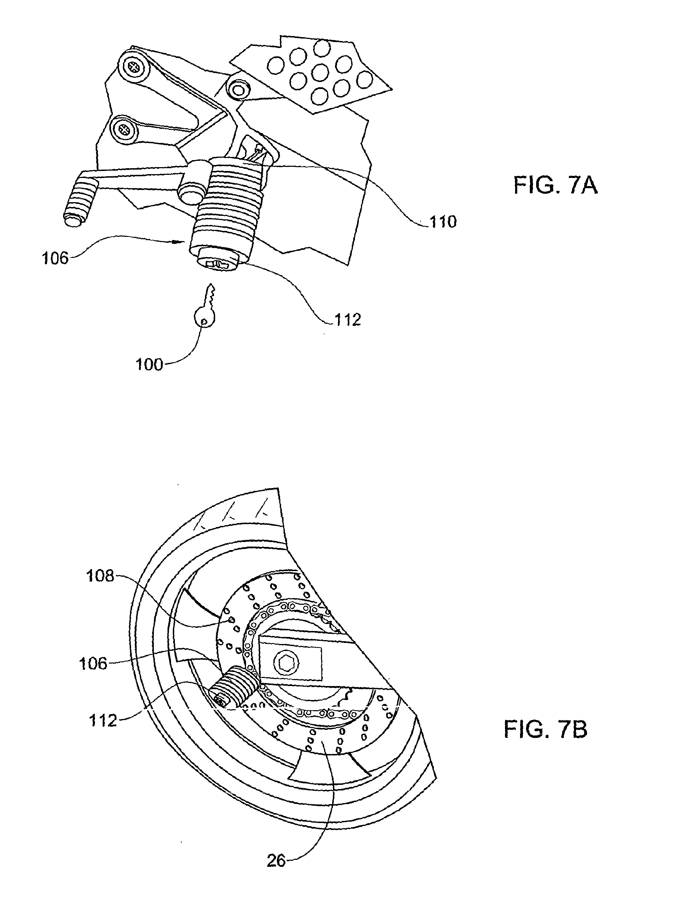

The embodiment of Figs. 7A and 7B illustrates still a modification of the invention wherein a footpeg (also referred to as a foot rest) 106 is a dual-function device serving as a footpeg in Fig. 7A to facilitate gear shifting, and serving as a king-pin type disk-brake lock (Fig. 7B), for lockingly engaging within one of the plurality of holes **108** formed in a conventional disk-brake **26** (on either a front or rear disk-brake of the motorcycle).

The footpeg **106** is lockingly mounted to a corresponding mounting unit **110** and is lockingly attached or detached therefrom by means of the locking mechanism **112** of the king-pin. By the same king-pin and locking mechanism the footpeg **100** is lockingly engaged to the disk-brake (a rear wheel of the motorcycle in the present example), as in Fig. 7B. According to some other embodiments (not shown) rather or in addition to using the footpeg **106,** one could also use the gear-shift paddle, a hand-grip, etc.

Similar to the arrangement of the previous embodiments, also in the embodiment depicted in Figs. 7A and 7B, the disk-brake lock/footpeg serves as an anti-theft device such that the motorcycle cannot be operated with the disk-brake lock engaged on the one hand, whilst, on the other hand, an attempt to operate the motorcycle with the disk-brake lock **106** engaged, will immediately alert the operator who will become aware that the disk-brake lock is still engaged.

Further attention is now directed to Figs. 8A-8C of the drawings illustrating a particular embodiment of a footrest-disk-brake lock in accordance with a modification of the present invention. The footrest generally designated **120** has an overall shape similar to footpeg **14** as illustrated in Fig. 4, and comprises a body portion **122** formed with a disk-receiving slot **126** sized and shaped for alternate locking engagement with a connector **127** of a mounting unit **130** (similar to mounting unit **62** in Fig. 3B) and for locking engagement in an embracing manner over a disk-brake as explained in connection with the embodiments of Figs. 2 to 4.

The footpeg **120** further comprises a locking pin **134** spring biased by a coil-spring **136** into its retracted position as in Figs. 8A and 8C, though prevented from removal e.g. by a restricting pin (not seen), so as to prevent losing the pin **134** and the associated spring **136.** Pin **134** serves for locking engagement of the footpeg **120** by penetration into hole **128** (Fig. 8A).of mounting unit **130** and for locking embracement over a brake-disk.

Locking pin **134** is controlled by an axially displaceable locking rod **146**, fitted for arresting the locking pin **134** by engagement with a corresponding notch **150** formed at an end of the locking pin **134** (Figs. 8B and 8C). By means of a coiled spring **148** the rod is biased to retract from the notch **150**. Locking rod **146** is manipulable by means of a locking mechanism **160** which by a removable key **164** propels the locking pin **146** into locking engagement with notch **150** of the locking pin **134** (Fig. 8B), to facilitate its locking engagement with a mounting unit **130** or embracingly over a disk-brake (not shown). Unlocking the lock mechanism **160** permits the locking rod **146** to spontaneously retract into its open position (Fig. 8C) to disengage from notch **150** of the locking pin **134** to thereby facilitate disengagement from the mounting unit **130** or from a brake-disk, respectively.

As can further be noted in Fig. 8A, the footpeg **120** is formed with a pivotable cover unit **172** fitted for covering the keyhole **174** of the locking mechanism **160**, to thereby prevent dirt, e.g. mud, water, etc. from entering the locking mechanism.

Furthermore, the footpeg **120** is formed with a gliding grove **178**, which facilitates easy location of the keyhole **174** by mealy sliding the key **164** over the grove **178,** directing the key **164** into the keyhole **174.** This arrangement is useful for fast insertion of the key into the keyhole also at extreme conditions e.g. at poor visibility, wearing gloves, etc. Still, the arrangement is such that sliding the key **164** over the gliding grove **178,** entails displacement of the cover unit **172** into its open positing.

It is apparent that a motorcycle may be fitted with two or more locking arrangements according to the invention where, for example, one lock is fitted for locking engagement with the front disk-brake (either by embracing or as a king-pin type lock) and an other lock is fitted for locking engagement with the rear disk-brake (typically as a king-pin type lock). It is thus possible to increase the security level by providing more than one locking mechanism and by simultaneous removal more than one essential component from the motorcycle.

In addition to solving the problem of a motorcycle operator inadvertently attempting to ride the motorcycle with a disk-brake lock engaged, the device of the present invention also solves the problem of storing and transporting the lock when not in use, since the lock is transported in the form of a footpeg.

The disk-brake lock/footpeg of the present invention therefore provides an effective method for efficiently and conveniently transporting a disk-brake lock, while also preventing damage to the motorcycle and the operator by neglecting to remove the disk-brake lock before commencing operation of the motorcycle.

According to other modifications of the invention the mounting unit comprises a discreet connector for connecting only to a designated mating coupler of the component. Such a discreet connection may be obtained, for example, by forming the mounting unit in the form of a pin having a polygonal cross section or an abnormal cross section, where the mating portion of the locking mechanism of the lock component has a receptacle formed with a corresponding cross section.

By a further embodiment, the locking member may constitute part of an electronic immobilizing system, such that, for example, the ignition system of the motorcycle will not ignite at the absence of the locking component (e.g. footpeg or hand-grip) from its functional location attached to the motorcycle. Evermore so, the arrangement may be such that an attempt to ignite the motorcycle before attaching the locking member to its functional location, may trigger an alarm signal such as an audible signal, etc.

Whilst several embodiments have been shown and described, it is to be understood that it is not intended thereby to limit the disclosure, but rather it is intended to cover all embodiments, modifications and arrangements falling within the scope of the present invention, as defined in the appended claims.

## Claims

1. A lock for a motorcycle (10) said lock is detachably connectable to a mounting unit (42,76,96) of the motorcycle said lock is suitable for locking engagement to a disk-brake (26) of the motorcycle, **characterized in that** said lock is adapted to be a functional component of the motorcycle as required for starting or driving the motorcycle, wherein whenever said functional component is detached from the mounting unit starting or driving of the motorcycle becomes highly unlikely or not possible at all.

2. A lock according to claim 1, wherein the functional component comprises a footpeg (14) of the motorcycle.

3. A lock according to claim 1, wherein the functional component comprises a hand-grip (70) of the motorcycle.

4. A lock according to claim 1, wherein the functional component comprises a gear-shift paddle (93) of the motorcycle.

5. A lock according to claim 1, wherein the functional component comprises a U-like shaped portion (54) with a disk-receiving slot (60) formed between arms of the component for embracing a portion of the disk-brake (26) of the motorcycle.

6. A lock according to claim 5, wherein the disk-receiving slot (60) extends between two parallel walls of the arms.

7. A lock according to claim 1, wherein the functional component comprises a rigid metal core formed or coated with an anti-slip surface (56,82).

8. A lock according to claim 1, wherein the functional component is detachably connectable to the mounting unit (42) by a pin-type locking mechanism (46,88,89) adapted for locking engagement with the mounting unit and for locking engagement with an aperture formed in the disk-brake.

9. A lock according to claim 8, wherein the functional component is at least one component selected from the group comprising a hand-grip (70), a footpeg (14) and a gear paddle (93).

10. A lock according to claim 1, wherein a gear shifting mechanism of the motorcycle comprises a footpeg (14) and a gear paddle (93), both of which being detachable functional components suited for locking engagement with a disk-brake (26) of the motorcycle.

11. A lock according to claim 1, wherein the functional component accommodates an alarm system for generating an audible alarm signal upon attempting to move the motorcycle when the component is in locking engagement with the disk-brake (26).

12. A lock according to claim 1, wherein the functional component comprises an electronic immobilizer cooperating in conjunction with the mounting unit (43,76,96), to thereby dysfunction an ignition system of the motorcycle whenever the component is detached from the mounting unit.

13. A lock according to claim 11, wherein an attempt to ignite the motorcycle prior to attaching the functional component to the mounting unit, generates an alarm signal.

14. A lock according to claim 1, wherein the mounting unit comprises a connector portion (64,127) connectable to the functional component.

15. A lock according to claim 1, wherein it is highly unlikely or not possible at all to start and roll the motorcycle (10) before disengaging the functional component from the disk-brake (26) and reengaging it at a location of the motorcycle in which it is capable to perform its function essential for starting or driving the motorcycle.

16. A lock according to claim 1, wherein the functional component may be retro-fitted to the motorcycle.

17. A lock according to claim 1, wherein the mounting unit (43,76,96) may be retro-fitted to the motorcycle.

18. A lock according to claim 8, wherein the locking mechanism (160) is fitted with a key-hole (174) provided with a cover unit (172).

19. A lock according to claim 18, wherein the key-hole (174) extends within a guide-track (178) to facilitate guiding a key (164) into said key-hole (174).

20. A lock according to claim 8, wherein the locking mechanism (160) comprises a retractable locking pin (134) adapted to function as a coupling hinge.

21. A lock according to claim 1, wherein the functional component is a footrest fitted at a bottom face thereof with a ground-engaging probe.

22. A motorcycle (10) comprising a lock as claimed in claim 1.

## Patentansprüche

1. Ein Schloss für ein Motorrad (10), genanntes Schloss ist abnehmbar mit einer Befestigungseinheit (42, 76, 96) des Motorrads zu verbinden, das genannte Schloss für den verschliessenden Eingriff in eine Scheibenbremse (26) des Motorrads geeignet, **gekennzeichnet dadurch, dass** das genannte Schloss dazu adaptiert ist, eine Funktionskomponente des Motorrads wie für das Starten oder Fahren des Motorrads erforderlich zu sein, worin das Starten oder Fahren des Motorrads höchst unwahrscheinlich oder gar nicht möglich ist, wenn die genannte Funktionskomponente von der Befestigungseinheit abgenommen wird.

2. Ein Schloss nach Anspruch 1, worin die Funktionskomponente einen Fußschalter (14) des Motorrads umfasst.

3. Ein Schloss nach Anspruch 1, worin die Funktionskomponente einen Handgriff (70) des Motorrads umfasst.

4. Ein Schloss nach Anspruch 1, worin die Funktionskomponente einen Gangschalthebel (93) des Motorrads umfasst.

5. Ein Schloss nach Anspruch 1, worin die Funktionskomponente einen U-förmigen Abschnitt (54) mit einem zwischen Armen der Komponente für das Einschließen eines Abschnitts der Scheibenbremse (26) des Motorrads geformten, eine Scheibe empfangenden Schlitz (60) umfasst.

6. Ein Schloss nach Anspruch 5, worin der die Scheibe empfangende Schlitz (60) sich zwischen zwei parallelen Wänden der Arme erstreckt.

7. Ein Schloss nach Anspruch 1, worin die Funktionskomponente einen aus einer rutschfesten Oberfläche (56, 82) geformten oder mit derselben beschichteten steifen Metallkern umfasst.

8. Ein Schloss nach Anspruch 1, worin die Funktionskomponente mittels eines stiftartigen, für den verschliessenden Eingriff in die Befestigungseinheit und für den verschliessenden Eingriff in eine in der Scheibenbremse geformten Öffnung adaptierten Verschlussmechanismus (46, 88, 89) abnehmbar mit der Befestigungseinheit (42) zu verbinden ist.

9. Ein Schloss nach Anspruch 8, worin die Funktionskomponente wenigstens eine aus der einen Handgriff (70), einen Fußschalter (14), und einen Gangschalthebel (93) umfassenden Gruppe ausgewählte Komponente ist.

10. Ein Schloss nach Anspruch 1, worin ein Gangschaltmechanismus des Motorrads einen Fußschalter (14) und einen Gangschalthebel (93) umfasst, welche beide abnehmbare Funktionskomponenten und für einen verschliessenden Eingriff in eine Scheibenbremse (26) des Motorrads geeignet sind.

11. Ein Schloss nach Anspruch 1, worin die Funktionskomponente ein Alarmsystem aufnimmt, für das Erzeugen eines hörbaren Alarmsignals nach einem Versuch, das Motorrad zu bewegen wenn die Komponente sich in verschliessendem Eingriff in die Scheibenbremse (26) befindet.

12. Ein Schloss nach Anspruch 1, worin die Funktionskomponente eine mit der Befestigungseinheit (43, 76, 96) kooperierende elektronische Wegfahrsperre umfasst, um **dadurch** ein Zündsystem des Motorrads außer Funktion zu setzen, wenn die Komponente von der Befestigungseinheit abgenommen wird.

13. Ein Schloss nach Anspruch 11, worin ein Versuch, das Motorrad vor dem Befestigen der Funktionskomponente an der Befestigungseinheit anzulassen, ein Alarmsignal erzeugt.

14. Ein Schloss nach Anspruch 1, worin die Befestigungseinheit einen mit der Funktionskomponente verbindbaren Verbindungsabschnitt (64, 127) umfasst.

15. Ein Schloss nach Anspruch 1, worin es höchst unwahrscheinlich oder gar nicht möglich ist, das Motorrad (10) vor dem Abtrennen der Funktionskomponente von der Scheibenbremse (26) und dem erneuten Eingreifen derselben an einer Stelle des Motorrads zu starten oder zu rollen, an welcher sie ihre für das Starten oder Fahren des Motorrads unentbehrliche Funktion erfüllen kann.

16. Ein Schloss nach Anspruch 1, worin die Funktionskomponente nachträglich an das Motorrad angebaut werden kann.

17. Ein Schloss nach Anspruch 1, worin die Befestigungseinheit (43, 76, 96) nachträglich an das Motorrad angebaut werden kann.

18. Ein Schloss nach Anspruch 8, worin der Verschlussmechanismus (160) mit einem mit einer Abdeckung (172) versehenen Schlüsselloch (174) ausgestattet ist.

19. Ein Schloss nach Anspruch 18, worin das Schlüsselloch (174) sich innerhalb eines Leitpfads (178) erstreckt, um das Einführen eines Schlüssels (164) in das genannte Schlüsselloch (174) zu ermöglichen.

20. Ein Schloss nach Anspruch 8, worin der Verschlussmechanismus (160) einen für die Funktion als ein Kupplungsscharnier adaptierten herausnehmbaren Verschlussstift (134) umfasst.

21. Ein Schloss nach Anspruch 1, worin die Funktionskomponente eine mit einer an deren Unterseite angebrachten Bodenkontaktsonde ausgestattete Fußstütze ist.

22. Ein Motorrad (10), umfassend ein Schloss nach Anspruch 1.

## Revendications

1. Dispositif de verrouillage pour un motocycle (10), ledit dispositif de verrouillage est connectable de manière détachable sur un module de montage (42, 76, 96) du motocycle, ledit dispositif de verrouillage convient pour un engagement de verrouillage sur un frein à disque (26) du motocycle, **caractérisé en ce que** ledit dispositif de verrouillage est adapté pour être un composant fonctionnel du motocycle indispensable pour le démarrage ou la conduite du motocycle, dans lequel chaque fois que ledit composant fonctionnel est détaché du module de montage, le démarrage ou la conduite du motocycle devient hautement improbable, sinon impossible.

2. Dispositif de verrouillage selon la revendication 1, dans lequel le composant fonctionnel comporte un support de repose-pied (14) du motocycle.

3. Dispositif de verrouillage selon la revendication 1, dans lequel le composant fonctionnel comporte une poignée (70) du motocycle.

4. Dispositif de verrouillage selon la revendication 1, dans lequel le composant fonctionnel comporte une pédale de changement de vitesse (93) du motocycle.

5. Dispositif de verrouillage selon la revendication 1, dans lequel le composant fonctionnel comporte une portion en forme de U (54) avec une fente pour réception de disque (60) formée entre les branches du composant permettant d'étreindre une portion du frein à disque (26) du motocycle.

6. Dispositif de verrouillage selon la revendication 5, dans lequel la fente pour réception de disque (60) se prolonge entre deux parois parallèles des branches.

7. Dispositif de verrouillage selon la revendication 1, dans lequel le composant fonctionnel comporte un noyau métallique rigide formé ou revêtu d'une surface antidérapante (56, 82).

8. Dispositif de verrouillage selon la revendication 1, dans lequel le composant fonctionnel est connectable de manière détachable sur le module de montage (42) par un mécanisme de verrouillage de type goupille (46, 88, 89) adapté pour un engagement de verrouillage avec le module de montage et pour un engagement de verrouillage avec une ouverture formée dans le frein à disque.

9. Dispositif de verrouillage selon la revendication 8, dans lequel le composant fonctionnel est au moins un composant sélectionné dans le groupe comportant une poignée (70), un support de repose-pied (14) et une pédale de changement de vitesse (93).

10. Dispositif de verrouillage selon la revendication 1, dans lequel un mécanisme de changement de vitesse du motocycle comporte un support de repose-pied (14) et une pédale de changement de vitesse (93), les deux étant des composants fonctionnels détachables convenant pour un engagement de verrouillage avec un frein à disque (26) du motocycle.

11. Dispositif de verrouillage selon la revendication 1, dans lequel le composant fonctionnel abrite un système d'alarme permettant de produire un signal d'alarme sonore lors de toute tentative de déplacement du motocycle alors que le composant est dans un engagement de verrouillage avec le frein à disque (26).

12. Dispositif de verrouillage selon la revendication 1, dans lequel le composant fonctionnel comporte un dispositif anti-démarrage électronique coopérant conjointement avec le module de montage (43, 76, 96), pour, de ce fait, entraîner un dysfonctionnement d'un système d'allumage du motocycle chaque fois que le composant est détaché du module de montage.

13. Dispositif de verrouillage selon la revendication 11, dans lequel une tentative d'allumage du motocycle, avant d'attacher le composant fonctionnel sur le module de montage, produit un signal d'alarme.

14. Dispositif de verrouillage selon la revendication 1, dans lequel le module de montage comporte une portion de type connecteur (64, 127) connectable sur le composant fonctionnel.

15. Dispositif de verrouillage selon la revendication 1, dans lequel il est hautement improbable sinon impossible de démarrer et de faire rouler le motocycle (10) avant de désengager le composant fonctionnel du frein à disque (26) et de le réengager en un endroit du motocycle dans lequel il est capable de réaliser sa fonction essentielle pour démarrer ou conduire le motocycle.

16. Dispositif de verrouillage selon la revendication 1, dans lequel le composant fonctionnel peut être installé après coup sur le motocycle.

17. Dispositif de verrouillage selon la revendication 1, dans lequel le module de montage (43, 76, 96) peut être installé après coup sur le motocycle.

18. Dispositif de verrouillage selon la revendication 8, dans lequel le mécanisme de verrouillage (160) est équipé d'un trou de serrure (174) muni d'un organe de type couvercle (172).

19. Dispositif de verrouillage selon la revendication 18, dans lequel le trou de serrure (174) se prolonge à l'intérieur d'un chemin de guidage (178) afin de faciliter le guidage d'une clé (164) dans ledit trou de serrure (174).

20. Dispositif de verrouillage selon la revendication 8, dans lequel le mécanisme de verrouillage (160) comporte une goupille de verrouillage rétractable (134) adaptée pour fonctionner en tant qu'articulation d'accouplement.

21. Dispositif de verrouillage selon la revendication 1, dans lequel le composant fonctionnel est un repose-pied équipé sur sa surface inférieure d'une sonde de mise à la terre.

22. Motocycle (10) comportant un dispositif de verrouillage selon la revendication 1.
